(19) Europäisches Patentamt
European Patent Office
Office européen des brevets

(11) **EP 3 238 516 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(21) Anmeldenummer: **17165908.9**

(22) Anmeldetag: **11.04.2017**

(51) Int Cl.:
***A01B 59/06*** *(2006.01)*

(54) **VERFAHREN ZUR ERMITTLUNG EINER MASSE EINES ANBAUGERÄTES FÜR EIN NUTZFAHRZEUG**

METHOD FOR DETERMINING A MASS OF AN ATTACHMENT FOR A WORK VEHICLE

PROCÉDÉ DE DÉTERMINATION D'UNE MASSE D'ÉQUIPEMENT PORTÉ POUR UN VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2016 DE 102016207204**

(43) Veröffentlichungstag der Anmeldung:
**01.11.2017 Patentblatt 2017/44**

(73) Patentinhaber: **Deere & Company**
**Moline, IL 61265 (US)**

(72) Erfinder:
• **Meid, Michael**
**68163 Mannheim (DE)**
• **Traut, Sebastian**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 0 892 256     EP-A1- 2 947 431**
**EP-A2- 2 239 467     US-A1- 2008 110 647**

EP 3 238 516 B1

**Beschreibung**

Die Erfindung betrifft ein Verfahren zur Ermittlung einer Masse eines Anbaugerätes, welches an eine Tragstruktur eines Nutzfahrzeugs angelenkt ist.

Es ist bekannt, an der Frontseite von landwirtschaftlichen Fahrzeugen sogenannte Anbaugeräte mit bestimmten Arbeitsfunktionen anzukoppeln. Zur Kopplung kann ein Frontkraftheber verwendet werden. Eine derartige Vorrichtung ist z.B. aus dem Dokument EP 2 239 467 A2 bekannt.

Oftmals ist es wichtig, während des Fahrzeugbetriebs eine Information über den aktuellen Status einer Masse des Anbaugerätes zu erhalten, um den landwirtschaftlichen Einsatz besser steuern zu können.

Der Erfindung liegt daher die Aufgabe zugrunde, eine aktuelle Status-Information über eine Masse des Anbaugerätes auf einfache Weise zu ermitteln.

Diese Aufgabe wird gemäß den Merkmalen des Patentanspruchs 1 gelöst.

Gemäß Patentanspruch 1 wird eine Masse des Anbaugerätes ermittelt. Die jeweilige Status-Information bezüglich einer ermittelten Masse ist insbesondere relevant für Anbaugeräte mit variabler Zuladung (z.B. Spritzmittel, Dünger, Saatgut), beispielsweise für Spritzgeräte, Düngerstreuer, Saatgutstreuer.

Die ermittelte Masse des Anbaugerätes ist vorzugsweise eine aktuelle Gesamtmasse des Anbaugerätes einschließlich der aktuellen Zuladungs-Menge oder eine Masse des Anbaugerätes ohne Zuladung. Da die Masse des Anbaugerätes ohne Zuladung ermittelbar ist oder sogar bereits bekannt ist, kann während des Einsatzes des Fahrzeugs jederzeit die verbrauchte Menge der Zuladung ermittelt werden. Aus der Ermittlung der Masse des Anbaugerätes können auch weitere Informationen abgeleitet werden, beispielsweise die ausgebrachte Masse bzw. Menge der Zuladung je gefahrener Streckeneinheit (z.B. Meter) des Fahrzeugs oder eine Rest-Reichweite der auszubringenden Zuladung. Derartige Informationen können mit geringem Daten- und Rechenaufwand ermittelt und dem Fahrzeugführer oder einer anderen für den Fahrzeugeinsatz zuständigen Person auf geeignete Weise optisch und/oder akustisch (z.B. an einer graphischen Bedienungsoberfläche) zur Verfügung gestellt werden. Die Ermittlung der Masse und daraus abgeleitete Informationen können deshalb dazu beitragen, den jeweiligen Arbeitseinsatz des Fahrzeugs effizient und für den Fahrzeugführer komfortabel zu gestalten.

Die Masse des Anbaugerätes wird auf der Basis von verhältnismäßig einfach bestimmbaren physikalischen Größen am Frontkraftheber ermittelt. Dabei werden folgende Größen ermittelt:

- ein Winkel zwischen dem Oberlenker und einer Fahrzeug-Horizontalen,
- ein Winkel zwischen dem Unterlenker und einer Fahrzeug-Horizontalen,
- ein Neigungswinkel einer Fahrzeug-Horizontalen gegenüber der Erdhorizontalen,
- eine Strecke, welche eine Verbindung entlang des Unterlenkers zwischen der Tragstruktur und dem Anbaugerät repräsentiert,
- eine an einer Verbindung zwischen Oberlenker und Anbaugerät angreifende und entlang des Oberlenkers wirksame Kraft.

Die vorgenannten Winkel können mittels geeigneter Längensensoren oder Abstandssensoren ermittelt werden. Alternativ können Winkelsensoren eingesetzt werden. Im Falle eines mechanischen Oberlenkers kann der Winkel zwischen dem Oberlenker bzw. Unterlenker und einer Fahrzeug-Horizontalen auch mittels eines zweiaxialen Kraftsensors (Kraftmessbolzens) bestimmt werden. Die vorgenannte Strecke ist vorzugsweise bekannt und muss dann nicht weiter ermittelt werden. Alternativ kann zur Ermittlung der Strecke ein Längensensor oder Abstandssensor verwendet werden. Die an der Verbindung zwischen Oberlenker und Anbaugerät angreifende und entlang des Oberlenkers wirksame Kraft kann mittels Drucksensoren im Oberlenker ermittelt werden. Im Falle eines mechanischen Oberlenkers kann diese Kraft auch mittels eines zweiaxialen Kraftsensors (Kraftmessbolzens) bestimmt werden. Vorzugsweise ist dieser zweiaxiale Kraftsensor an einer Verbindungsstelle positioniert, welche als Verbindung zwischen der Tragstruktur und dem Oberlenker wirkt.

Analog können auch die weiteren noch zu beschreibenden Winkel, Strecken und Kräfte mittels eines oder mehrerer der vorgenannten Sensoren ermittelt oder gemessen werden.

Insgesamt kann mit einer geringen Anzahl als Standardprodukte verfügbarer Sensoren und somit kostengünstig mit wenigen sensierten physikalischen Größen die Masse des Anbaugerätes ermittelt werden. Teilweise können die benötigten Sensoren für andere Zwecke ohnehin bereits am Fahrzeug vorhanden sein, so dass in solchen Fällen der Aufwand für die Ermittlung der Masse des Anbaugerätes weiter reduziert ist.

Die gegenüber der Fahrzeug-Horizontalen bzw. Fahrzeug-Vertikalen gebildeten Winkel beziehen sich hierbei vorzugsweise auf ein fahrzeugfestes Koordinatensystem. Die Neigung der Tragstruktur bzw. des Nutzfahrzeugs bzw. des fahrzeugfesten Koordinatensystems gegenüber der Erdhorizontalen wird hierbei durch den oben genannten Neigungswinkel berücksichtigt. Der Neigungswinkel nimmt Werte größer Null für den Fall an, dass das Nutzfahrzeug in Vorwärtsrichtung hangaufwärts orientiert ist.

Das Nutzfahrzeug ist insbesondere ein landwirtschaftliches Fahrzeug, z.B. ein Traktor. Bei der Tragstruktur handelt es sich um eine tragende Struktur des Fahrzeugs, z.B. um einen Rahmen oder andere tragende Teile. Oberlenker und Unterlenker des Krafthebers sind an der Tragstruktur schwenkbar gelagert bzw. angelenkt, um das jeweilige Anbaugerät in unterschiedliche Positionen zu überführen.

Eine schwenkbare Lagerung bzw. Anlenkung an der Tragstruktur bedeutet, dass das jeweilige Bauteil entweder unmittelbar an der Tragstruktur selbst oder an einem mit der Tragstruktur starr verbundenen Bestandteil (z.B. Gehäuse eines Getriebe-Differenzial-Blocks) des Fahrzeugs gelagert bzw. angelenkt ist.

Der Frontkraftheber bewirkt üblicherweise eine Mehrpunktaufnahme des Anbaugerätes an dem Fahrzeug. Insbesondere ist eine Dreipunktaufnahme vorgesehen, bei der das Anbaugerät mittels zweier Unterlenker und eines Oberlenkers an der Tragstruktur aufgenommen bzw. an der Tragstruktur angelenkt ist.

Der Kraftheber enthält üblicherweise mindestens einen längenverstellbaren Hubarm, um das Anbaugerät mittels der vorhandenen Unterlenker und Oberlenker in unterschiedliche Positionen (z.B. Arbeitsposition, Transportposition) überführen zu können. Die am Kraftheber vorhandenen Hubarme werden zumindest teilweise auf geeignete Weise angesteuert (z.B. hydraulisch oder elektrisch), um Hebe- und Senkbewegungen des Krafthebers zu realisieren.

Ein längenverstellbarer Hubarm wird herangezogen, um eine oder mehrere physikalische Größen zur Ermittlung der Masse des Anbaugerätes abzuleiten. Erfindungsgemäß wird dabei ein Winkel berücksichtigt, der von einer Fahrzeug-Vertikalen und einer Verbindungsstrecke zwischen zwei Wirkenden des Hubarmes eingeschlossen ist. Dieser Winkel wird durch eine geeignete Sensorik, z.B. einen Winkelsensor, ermittelt oder aber rechnerisch abgeleitet.

Weiter erfindungsgemäß wird zur Ermittlung der Masse des Anbaugerätes eine zwischen den zwei Wirkenden des Hubarmes wirksame Druckkraft berücksichtigt. Die Ermittlung dieser Druckkraft kann entweder direkt mittels einer Sensorik an diesem Hubarm oder indirekt mittels einer Sensorik an einer anderen geeigneten Stelle des Krafthebers ermittelt werden. Die Sensorik weist vorzugsweise einen Drucksensor, insbesondere Differenzdrucksensor, auf.

Ein Wirkende des längenverstellbaren Hubarms ist mit der Tragstruktur gelenkig verbunden, während ein weiteres Wirkende des Hubarms an einer Lenker-Verbindungsstelle des Unterlenkers angelenkt ist. Erfindungsgemäß wird hierbei auf einfache Weise eine weitere Größe zur Ermittlung der Masse des Anbaugerätes berücksichtigt. Diese Größe ist die Länge einer Verbindungsstrecke entlang des Unterlenkers zwischen der Tragstruktur und der Lenker-Verbindungsstelle. Die Länge dieser Verbindungsstrecke ist entweder bereits aus den Daten des Krafthebers bekannt oder wird auf geeignete Weise ermittelt.

Vorzugsweise sind einzelne oder sämtliche im Kraftheber eingesetzten längenverstellbare Hubarme jeweils als Kolben-Zylinder-Einheit ausgebildet und wirken dabei insbesondere als hydraulische Hubzylinder, welche mit einem hydraulischen Steuerkreislauf am Fahrzeug technisch einfach koppelbar sind.

Vorteilhaft wird die ermittelte Masse des Anbaugerätes zusätzlich dazu verwendet, um Daten über den Schwerpunkt des Anbaugerätes zu ermitteln. Hierdurch kann eine Bewegungssteuerung des Krafthebers unterstützt werden, z.B. für eine genaue Überführung des Anbaugerätes in eine gewünschte Soll-Position.

Vorzugsweise wird für eine eindeutige Ermittlung des Schwerpunktes ein Koordinatensystem definiert mit einer x-Achse und einer z-Achse. Dabei ist die x-Achse parallel zu einer Längsrichtung bzw. einer Fahrzeug-Horizontalen des Nutzfahrzeugs ausgerichtet und die z-Achse parallel zu einer Hochrichtung bzw. einer Fahrzeug-Vertikalen des Nutzfahrzeugs ausgerichtet, wobei sich die x-Achse und die z-Achse in einem Nullpunkt des Koordinatensystems schneiden. Hierdurch lassen sich die Daten des Schwerpunktes mathematisch einfach mit einem eindeutigen Bezugspunkt ermitteln. Geeignete Nullpunkte sind beispielsweise die Position einer Hinterachse des Nutzfahrzeugs.

In einer bevorzugten Ausführungsform beinhalten die zu ermittelnden Daten des Schwerpunktes des Anbaugerätes dessen x-Koordinate in dem vorgenannten Koordinatensystem, wodurch mit geringem algorithmischen Verarbeitungsaufwand für viele Anwendungsfälle ausreichende Daten für eine Bewegungssteuerung des Frontkrafthebers und für eine Ermittlung der aktuellen Position des Anbaugerätes ermittelbar sind.

Vorzugsweise wird die x-Koordinate des Schwerpunktes des Anbaugerätes in Abhängigkeit mindestens einer der folgenden physikalischen Größen am Kraftheber ermittelt:

- einem Winkel zwischen dem Oberlenker und einer Fahrzeug-Horizontalen,
- einer an einer Verbindung zwischen Oberlenker und Anbaugerät angreifenden und entlang des Oberlenkers wirksamen Kraft,
- einer x-Koordinate einer Anlenkstelle des Unterlenkers am Anbaugerät,
- einer Differenz zwischen den x-Koordinaten einer Anlenkstelle des Oberlenkers am Anbaugerät und einer Anlenkstelle des Unterlenkers am Anbaugerät, und
- einer Differenz zwischen den z-Koordinaten einer Anlenkstelle des Oberlenkers am Anbaugerät und einer Anlenkstelle des Unterlenkers am Anbaugerät.

Das erfindungsgemäße Verfahren wird im Folgenden anhand der beigefügten Zeichnungen näher erläutert. Dabei können hinsichtlich ihrer Funktion übereinstimmende bzw. vergleichbare Bauteile mit denselben Bezugszeichen gekennzeichnet sein. Es zeigen:

> Fig. 1 eine schematische Seitenansicht eines frontseitig an einem Nutzfahrzeug mittels eines Frontkrafthebers angelenkten Anbaugerätes,

> Fig. 2 eine schematische Darstellung von an einem Unterlenker des Frontkrafthebers gemäß Fig. 1 angreifenden Kräften, und

> Fig. 3 eine schematische Darstellung von an dem Anbaugerät gemäß Fig. 1 angreifenden Kräften.

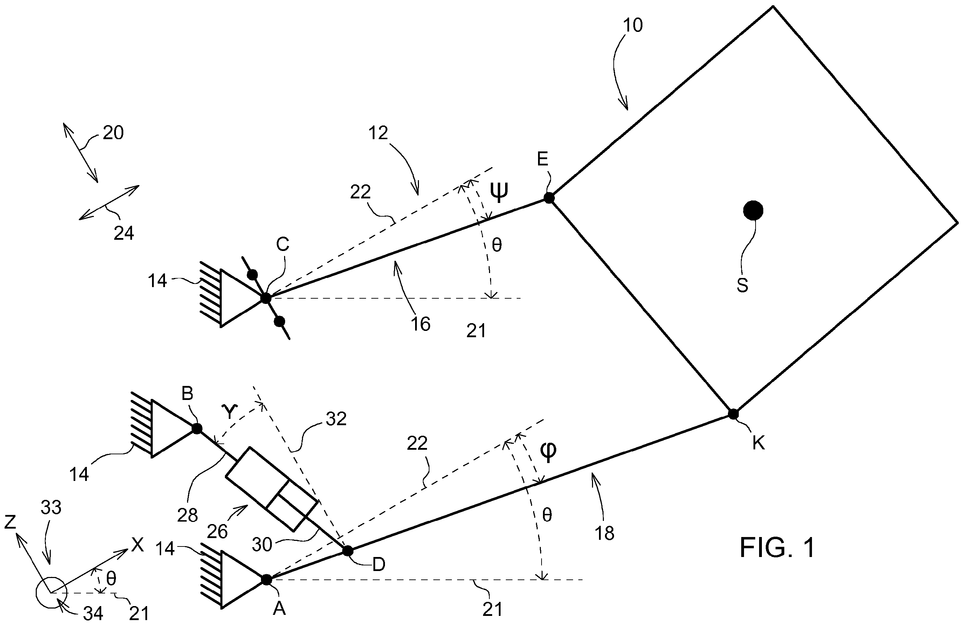

Fig. 1 zeigt schematisch ein Anbaugerät 10, welches an einer Frontseite eines Nutzfahrzeugs (vorzugsweise eines Traktors) angelenkt ist. Hierbei ist ein Frontkraftheber 12 an einer Tragstruktur 14 des Nutzfahrzeugs angelenkt. Der Frontkraftheber 12 bildet mit einem Oberlenker 16 und zwei parallelen Unterlenkern 18 eine Dreipunktaufnahme zur Aufnahme des Anbaugerätes 10. Der Oberlenker 16 ist über eine Anlenkstelle C mit der Tragstruktur 14 und über eine Anlenkstelle E mit dem Anbaugerät 10 gelenkig verbunden. In einer lotrecht zur Zeichenblattebene verlaufenden Querrichtung des Nutzfahrzeugs ist der Oberlenker 16 vorzugsweise mittig zwischen zwei parallelen Unterlenkern 18 angeordnet. Jeder Unterlenker 18 ist über eine Anlenkstelle A mit der Tragstruktur 14 und über eine Anlenkstelle K mit dem Anbaugerät 10 gelenkig verbunden. Die Anlenkstellen E, K am Anbaugerät sind in üblicher Weise, z.B. als Fanghaken des Frontkrafthebers 12, ausgebildet.

Die Anlenkstelle C lässt in Hochrichtung 20 des Nutzfahrzeugs im vorliegenden Ausführungsbeispiel drei verschiedene Positionen zur Anlenkung des Oberlenkers 16 zu. Die jeweilige Position wird vorzugsweise durch einen Benutzer festgelegt und entsprechend montiert. Zwischen dem Oberlenker 16 und einer Fahrzeug-Horizontalen 22 wird ein Winkel $\psi$ eingeschlossen. Zwischen jedem Unterlenker 18 und einer Fahrzeug-Horizontalen 22 wird ein Winkel $\varphi$ eingeschlossen.

Die gegenüber der Fahrzeug-Horizontalen 22 bzw. einer Fahrzeug-Vertikalen 32 gebildeten Winkel, insbesondere die Winkel $\psi$ und $\varphi$, beziehen sich hierbei auf ein fahrzeugfestes Koordinatensystem 33 mit einer x-Achse und einer z-Achse. Dabei verläuft die x-Achse parallel zur Längsrichtung 24 des Nutzfahrzeugs bzw. parallel zur Fahrzeug-Horizontalen 22. Die z-Achse verläuft parallel zur Hochrichtung 20 des Nutzfahrzeugs bzw. parallel zur Fahrzeug-Vertikalen 32. Die Neigung der Tragstruktur 14 und damit der Fahrzeug-Horizontalen 22 des Nutzfahrzeugs gegenüber der Erdhorizontalen 21 ist durch einen Neigungswinkel $\theta$ wiedergegeben. Der Neigungswinkel $\theta$ nimmt Werte größer Null für den Fall an, dass das Nutzfahrzeug in Vorwärtsrichtung hangaufwärts orientiert ist. Analog nimmt der Neigungswinkel $\theta$ Werte kleiner Null für den Fall an, dass das Nutzfahrzeug in Vorwärtsrichtung hangabwärts orientiert ist.

Ein in üblicher Weise als längenverstellbarer Hubzylinder 26 (Kolben-Zylinder-Einheit) ausgebildeter Hubarm ist Bestandteil des Frontkrafthebers 12. Ein Wirkende 28 des Hubzylinders 26 ist mit einer Anlenkstelle B der Tragstruktur 14 gelenkig verbunden, während das andere Wirkende 30 des Hubzylinders 26 an einer Lenker-Verbindungsstelle D des Unterlenkers 18 angelenkt ist. Eine Verbindungsstrecke zwischen den beiden Wirkenden 28, 30 schließt mit der in Hochrichtung 20 verlaufenden Fahrzeug-Vertikalen 32 einen Winkel $\gamma$ ein. Vorzugsweise sind beide Unterlenker 18 mit jeweils einem Hubzylinder 26 in der beschriebenen Weise verbunden.

Zur mathematisch-geometrischen Ermittlung einer Masse m und eines Schwerpunktes S des Anbaugerätes 10 wird das Koordinatensystem 33 definiert, dessen x-Achse parallel zur Längsrichtung 24 ausgerichtet ist und dessen z-Achse parallel zur Hochrichtung 20 ausgerichtet ist. Der Nullpunkt dieses Koordinatensystems 33 liegt im Ausführungsbeispiel gemäß Fig. 1 auf einer schematisch angedeuteten Hinterachse 34 des Nutzfahrzeugs.

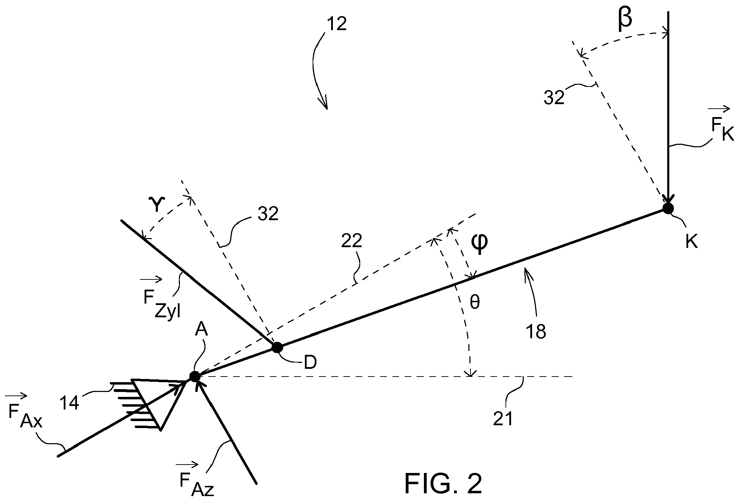

In Fig. 2 sind verschiedene, an dem Kräftesystem zwischen Tragstruktur 14 und Anbaugerät 10 angreifende Kräfte dargestellt. An der Anlenkstelle A greift eine Kraft an, deren x-Komponente mit $F_{Ax}$ und deren z-Komponente mit $F_{Az}$ bezeichnet ist. Zwischen den zwei Wirkenden 28, 30 des Hubzylinders 26 ist eine Zylinderkraft $F_{Zyl}$ wirksam. An der Anlenkstelle K zwischen Anbaugerät 10 und Unterlenker 18 greift eine Kraft an, die mit $F_K$ bezeichnet ist und unter einem Winkel $\beta$ gegenüber einer Fahrzeug-Vertikalen 32 ausgerichtet ist.

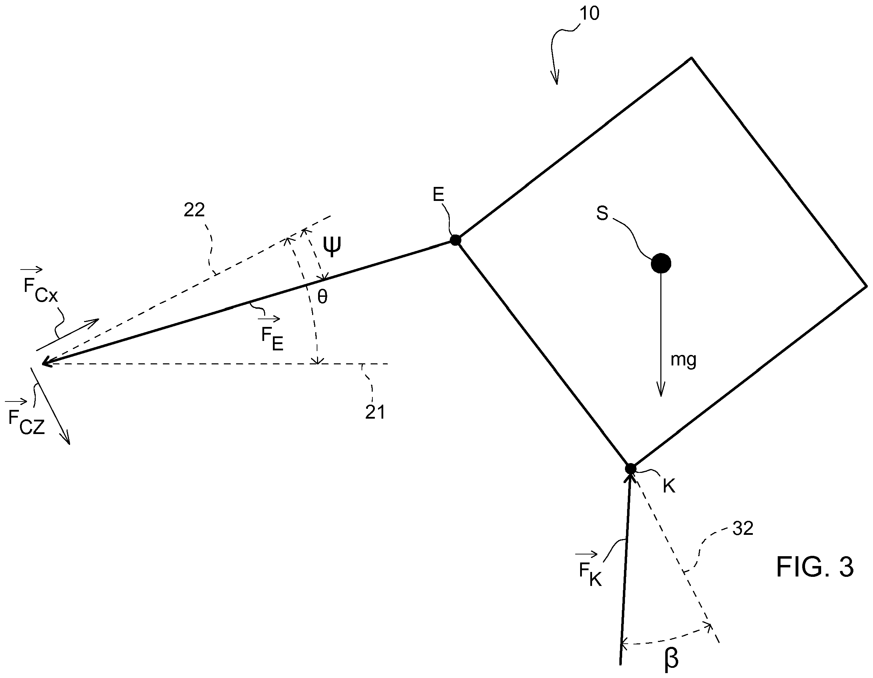

In Fig. 3 sind weitere Kräfte dargestellt, welche an dem Anbaugerät 10 angreifen. Eine an der Anlenkstelle E angreifende und entlang des Oberlenkers 16 wirksame Kraft ist mit $F_E$ bezeichnet. Im Schwerpunkt S des Anbaugerätes 10 ist dessen Gewichtskraft mit m·g bezeichnet, wobei g die Gravitationskonstante ist.

Aufgrund der Momenten- und Kräftegleichgewichte in Fig. 2 kann bei dem Frontkraftheber 12 von folgenden Zusammenhängen ausgegangen werden:

$$\sum M_i^{(A)} = 0 \rightarrow$$

$$0 = -\overline{AD} \cdot \vec{F}_{Zyl} \cdot \sin\gamma \cdot \sin\varphi + \overline{AD} \cdot \vec{F}_{Zyl} \cdot \cos\gamma \cdot \cos\varphi - \overline{AK} \cdot \vec{F}_K \cdot \sin\varphi \cdot \sin\beta - \overline{AK} \cdot \vec{F}_K \cdot \cos\varphi \cdot \cos\beta$$

$$(1),$$

$$\sum \vec{F}_{ix} = 0 \;\rightarrow$$

$$0 = \vec{F}_K \cdot \sin\beta - \vec{F}_{Zyl} \cdot \sin\gamma + \vec{F}_{Ax} \tag{2},$$

$$\sum \vec{F}_{iz} = 0 \;\rightarrow$$

$$0 = \vec{F}_K \cdot \cos\beta - \vec{F}_{Zyl} \cdot \cos\gamma + \vec{F}_{Az} \tag{3}.$$

Aufgrund der Momenten- und Kräftegleichgewichte in Fig. 3 kann bei dem Frontkraftheber 12 von folgenden weiteren Zusammenhängen ausgegangen werden:

$$\sum M_i^{(K)} = 0 \;\rightarrow$$

$$0 = \left(E_x - K_x\right)\cdot \vec{F}_E \cdot \sin\psi + \left(E_z - K_z\right)\cdot \vec{F}_E \cdot \cos\psi - \left(S_x - K_x\right)\cdot m\cdot g\cdot \cos\theta + \left(S_z - K_z\right)\cdot m\cdot g\cdot \sin\theta$$

$$\tag{4},$$

$$\sum \vec{F}_{ix} = 0 \;\rightarrow\; 0 = \vec{F}_K \cdot \sin\beta - \vec{F}_E \cdot \cos\psi - m\cdot g\cdot \sin\theta$$

$$\rightarrow \vec{F}_K \cdot \sin\beta = \vec{F}_E \cdot \cos\psi + m\cdot g\cdot \sin\theta$$

$$\tag{5},$$

$$\sum \vec{F}_{iz} = 0 \;\rightarrow\; 0 = \vec{F}_K \cdot \cos\beta + \vec{F}_E \cdot \sin\psi - m\cdot g\cdot \cos\theta$$

$$\rightarrow \vec{F}_K \cdot \cos\beta = -\vec{F}_E \cdot \sin\psi + m\cdot g\cdot \cos\theta$$

$$\tag{6}.$$

Durch Einsetzen der Gleichungen (5) und (6) in die Gleichung (1) sowie Auflösen der Gleichung (1) nach der Masse m des Anbaugerätes 10 ergibt sich für die Masse m

$$m = \frac{\overline{AD}\cdot \vec{F}_{Zyl}\cdot \cos(\varphi + \gamma) + \overline{AK}\cdot \vec{F}_E \cdot \sin(\psi - \varphi)}{\overline{AK}\cdot g\cdot \cos(\varphi - \theta)}$$

$$\tag{7}.$$

Somit wird die Masse m in Abhängigkeit

- des Winkels $\psi$ zwischen dem Oberlenker 16 und der Fahrzeug-Horizontalen 22,
- des Winkels $\varphi$ zwischen dem Unterlenker 18 und der Fahrzeug-Horizontalen 22,
- des Winkels $\gamma$ zwischen dem Hubzylinder 26 und der Fahrzeug-Vertikalen 32,
- des Neigungswinkels $\theta$ der Tragstruktur 14 bzw. der Fahrzeug-Horizontalen 22 des Nutzfahrzeugs gegenüber der Erdhorizontalen 21,
- der Strecke AK entlang des Unterlenkers 18 als Verbindung zwischen den Anlenkstellen A und K,
- der Strecke AD entlang des Unterlenkers 18 zwischen der Anlenkstelle A und der Lenker-Verbindungsstelle D,
- der Zylinderkraft $F_{Zyl}$ am Hubzylinder 26, und
- der Kraft $F_E$ entlang des Oberlenkers 16

ermittelt.

Die Längen der Strecken AD und AK sind als Konstruktions-Parameter des Frontkrafthebers 12 bekannt. Die Kraft $F_{Zyl}$ kann mittels eines Drucksensors bzw. Differenzdrucksensors im Hubzylinder 26 gemessen werden. Die Kraft $F_E$ kann z.B. mittels Drucksensoren und einem Längensensor am Oberlenker 16 oder alternativ (im Falle eines mechanischen Oberlenkers 16) mittels eines zweiaxialen Kraftsensors an der Anlenkstelle C gemessen werden. Die Winkel $\varphi$, $\gamma$ und $\psi$ in der Gleichung (7) können folgendermaßen hergeleitet werden:

$$\varphi = \tan^{-1}\left(\frac{A_z - D_z}{A_x - D_x}\right)$$

$$\gamma = \tan^{-1}\left(\frac{D_x - B_x}{D_z - B_z}\right)$$

$$\psi = \tan^{-1}\left(\frac{E_z - C_z}{E_x - C_x}\right) = \tan^{-1}\left(\frac{\vec{F}_{Cz}}{\vec{F}_{Cx}}\right)$$

Die x-Koordinaten $A_x$, $B_x$ und z-Koordinaten $A_z$, $B_z$ sind bekannt, da deren Anlenkstellen A und B an der Tragstruktur 14 feste Koordinaten bezüglich des Koordinatensystems 33 haben. Die x-Koordinate $C_x$ und die z-Koordinate $C_z$ der Anlenkstelle C sind vorzugsweise ebenfalls bekannt und werden entweder sensorisch ermittelt oder aber bedienerseitig vorgegeben.

Die vorgenannten Winkel können auch mittels geeigneter Winkelsensoren gemessen werden. Alternativ können zweiaxiale Kraftmessbolzen eingesetzt werden, wie anhand des Winkels $\psi$ und der beiden Kraftkomponenten $F_{ex}$ (entlang der x-Achse des Koordinatensystems 33) und $F_{Cz}$ (entlang der z-Achse des Koordinatensystems 33) schematisch dargestellt (Fig. 3).

Die veränderlichen x-Koordinaten und z-Koordinaten $D_x$ und $D_z$ der Lenker-Verbindungsstelle D sowie $E_x$ und $E_z$ der Anlenkstelle E können mathematisch wie folgt hergeleitet werden:

Zur Berechnung der Verbindungsstelle D werden zwei Kreise definiert. Der erste Kreis weist einen der Strecke BD entsprechenden Radius mit dem Kreismittelpunkt B und der zweite Kreis einen der Strecke AD entsprechenden Radius mit dem Kreismittelpunkt A auf. Die zugehörigen Kreisgleichungen lauten

$$\left(D_X - A_X\right)^2 + \left(D_Z - A_Z\right)^2 = \overline{AD}^2 \qquad \left(D_X - B_X\right)^2 + \left(D_Z - B_Z\right)^2 = \overline{BD}^2$$

Die beiden Kreisgleichungen werden nach der z-Komponente der Koordinate D aufgelöst. Dies ergibt eine Geradengleichung einer durch die beiden Kreisschnittpunkte verlaufenden Geraden der Gestalt

$$D_z = -\underbrace{\left(\frac{B_x - A_x}{B_z - A_z}\right)}_{u} \cdot D_x + \underbrace{\left(\frac{\overline{AD}^2 - \overline{BD}^2 + B_x^2 + B_z^2 - A_x^2 - A_z^2}{2 \cdot \left(B_z - A_z\right)}\right)}_{s}$$

$$D_z = -u \cdot D_x + s$$

Bezüglich der Lenker-Verbindungsstelle D werden die quadratische Gleichung, die sich durch Einsetzen der Geradengleichung in eine der beiden Kreisgleichungen ergibt,

$$D_x^{\ 2} + \underbrace{\frac{2\cdot(-B_x - u\cdot w)}{1+u^2}}_{p_2}\cdot D_x + \underbrace{\frac{B_x^2 + w^2 - \overline{BD}^2}{1+u^2}}_{q_2} = 0$$

sowie die Hilfsvariablen u, s und w

$$u = \left(\frac{B_x - A_x}{B_z - A_z}\right)$$

$$s = \left(\frac{\overline{AD}^2 - \overline{BD}^2 + B_x^2 + B_z^2 - A_x^2 - A_z^2}{2\cdot(B_z - A_z)}\right)$$

$$w = s - B_z$$

definiert. Daraus ergeben sich für die x-Koordinate $D_x$ und die z-Koordinate $D_z$ folgende Gleichungen:

$$D_x = -\frac{p_2}{2} + \sqrt{\frac{p_2^{\ 2}}{4} - q_2} = \frac{(B_x + u\cdot w)}{1+u^2} + \sqrt{\left(\frac{(B_x + u\cdot w)}{1+u^2}\right)^2 - \frac{B_x^2 + w^2 - \overline{BD}^2}{1+u^2}} \qquad (8)$$

$$D_z = -u\cdot D_x + s \qquad (9).$$

Dabei kann die Strecke BD beispielsweise mittels eines Längensensors bzw. eines Abstandssensors gemessen werden.

Zur Berechnung der Anlenkstelle E werden zwei weitere Kreise definiert. Der erste Kreis weist einen der Strecke EK entsprechenden Radius mit dem Kreismittelpunkt K und der zweite Kreis einen der Strecke CE entsprechenden Radius mit dem Kreismittelpunkt C auf. Die zugehörigen Kreisgleichungen lauten

$$\left(E_x - C_x\right)^2 + \left(E_z - C_z\right)^2 = \overline{CE}^2 \qquad\qquad \left(E_x - K_x\right)^2 + \left(E_z - K_z\right)^2 = \overline{EK}^2$$

Die beiden Kreisgleichungen werden nach der z-Komponente der Anlenkstelle E aufgelöst. Dies ergibt eine Geradengleichung einer durch die beiden Kreisschnittpunkte verlaufenden Geraden der Gestalt

$$E_z = -\underbrace{\left(\frac{C_x - K_x}{C_z - K_z}\right)}_{n}\cdot E_x + \underbrace{\left(\frac{\overline{EK}^2 - \overline{CE}^2 + C_x^2 + C_z^2 - K_x^2 - K_z^2}{2\cdot(C_z - K_z)}\right)}_{b}$$

$$E_z = -n\cdot E_x + b$$

Bezüglich der Anlenkstelle E werden die quadratische Gleichung, die sich durch Einsetzen der Geradengleichung in eine der beiden Kreisgleichungen ergibt,

$$E_x{}^2 + \underbrace{\frac{2 \cdot (-C_x - n \cdot z)}{1 + n^2}}_{p} \cdot E_x + \underbrace{\frac{C_x^2 + z^2 - \overline{CE}^2}{1 + n^2}}_{q} = 0$$

sowie die Hilfsvariablen n, b und z

$$n = \left( \frac{C_x - K_x}{C_z - K_z} \right)$$

$$b = \left( \frac{\overline{EK}^2 - \overline{CE}^2 + C_x^2 + C_z^2 - K_x^2 - K_z^2}{2 \cdot (C_z - K_z)} \right)$$

$$z = b - C_z$$

definiert. Daraus ergeben sich für die x-Koordinate $E_x$ und die z-Koordinate $E_z$ folgende Gleichungen:

$$E_x = -\frac{p}{2} + \sqrt{\frac{p^2}{4} - q} = \frac{(C_x + n \cdot z)}{1 + n^2} + \sqrt{\left( \frac{(C_x + n \cdot z)}{1 + n^2} \right)^2 - \frac{C_x^2 + z^2 - \overline{CE}^2}{1 + n^2}} \qquad (10)$$

$$E_z = -n \cdot E_x + b \qquad (11)$$

Dabei kann die Strecke CE beispielsweise mittels eines Längensensors bzw. eines Abstandssensors am Oberlenker 16 gemessen werden oder diese Strecke CE ist bei einer konstanten Länge des Oberlenkers 16 bekannt. Die Strecke EK ist ein definierter Wert entsprechend der Dimensionierung des Anbaugerätes 10.

Die x-Koordinate $S_x$ des Schwerpunktes S bezüglich des Koordinatensystems 33 kann durch Auflösen der Gleichung (4) nach $S_x$ ermittelt werden. In diesem Fall wird der Neigungswinkel θ vereinfachend mit Null Grad angenommen:

$$S_x = \frac{1}{m \cdot g} \left[ (E_x - K_x) \cdot \vec{F}_E \cdot \sin\psi + (E_z - K_z) \cdot \vec{F}_E \cdot \cos\psi + K_x \cdot m \cdot g \right] \qquad (12)$$

Somit wird die x-Koordinate des Schwerpunktes S in Abhängigkeit

- der ermittelten Masse m,
- des Winkels ψ zwischen Oberlenker 16 und der Fahrzeug-Horizontalen 22,
- der Kraft $F_E$ am Oberlenker 16,
- der x-Koordinate $K_x$ der Anlenkstelle K des Unterlenkers 18 am Anbaugerät 10,
- der Differenz zwischen den x-Koordinaten $E_x$ und $K_x$ der Anlenkstellen E und K am Anbaugerät 10, und
- der Differenz zwischen den z-Koordinaten $E_z$ und $K_z$ der Anlenkstellen E und K am Anbaugerät 10

ermittelt.

Die x-Koordinate $K_x$ und die z-Koordinate $K_z$ der Anlenkstelle K ergeben sich durch

$$K_x = A_x + \overline{AK} \cdot \cos\varphi \qquad \text{und} \qquad K_z = A_z - \overline{AK} \cdot \sin\varphi \quad ,$$

wobei die Strecke AK als Konstruktions-Parameter bekannt ist. Die übrigen Bestandteile und Werte der Gleichung (12) können gemäß der obigen Beschreibung hergeleitet werden.

**Patentansprüche**

1. Verfahren zur Ermittlung einer Masse (m) eines Anbaugerätes (10), welches mittels eines Frontkrafthebers (12) an eine Tragstruktur (14) eines Nutzfahrzeugs frontseitig angelenkt ist, wobei der Kraftheber (12) mindestens einen Oberlenker (16), mindestens einen Unterlenker (18) und einen längenverstellbaren Hubarm (26) aufweist, wobei ein Wirkende (28) des Hubarmes (26) mit der Tragstruktur (14) gelenkig verbunden wird und ein anderes Wirkende (30) des Hubarmes (26) an einer Lenker-Verbindungsstelle (D) des Unterlenkers (18) angelenkt wird, **dadurch gekennzeichnet, dass** die Masse m des Anbaugerätes (10) gemäß

$$m = \frac{\overline{AD} \cdot \vec{F}_{Zyl} \cdot \cos(\varphi + \gamma) + \overline{AK} \cdot \vec{F}_E \cdot \sin(\psi - \varphi)}{\overline{AK} \cdot g \cdot \cos(\varphi - \theta)}$$

in Abhängigkeit der folgenden Größen ermittelt wird:

 - eines Winkels $\psi$ zwischen dem Oberlenker (16) und einer Fahrzeug-Horizontalen (22),
 - eines Winkels $\varphi$ zwischen dem Unterlenker (18) und der Fahrzeug-Horizontalen (22),
 - eines Winkels $\gamma$ zwischen einer Fahrzeug-Vertikalen (32) und einer Verbindungsstrecke zwischen zwei Wirkenden (28, 30) des Hubarmes (26),
 - eines Neigungswinkels $\theta$ der Fahrzeug-Horizontalen (22) gegenüber der Erdhorizontalen (21),
 - einer Strecke AK, welche eine Verbindung entlang des Unterlenkers (18) zwischen der Tragstruktur (14) und dem Anbaugerät (10) repräsentiert,
 - einer Strecke AD, welche eine Verbindung entlang des Unterlenkers (18) zwischen der Tragstruktur (14) und der Lenker-Verbindungsstelle (D) repräsentiert,
 - einer zwischen den zwei Wirkenden (28, 30) des Hubarmes (26) wirksamen Kraft $F_{zyl}$, und
 - einer an einer Verbindung zwischen Oberlenker (16) und Anbaugerät (10) angreifenden und entlang des Oberlenkers (16) wirksamen Kraft $F_E$.

2. Verfahren nach Anspruch 1, **dadurch gekennzeichnet, dass** ein Hubarm eine Kolben-Zylinder-Einheit (26) aufweist, insbesondere aus einer Kolben-Zylinder-Einheit (26) besteht.

3. Verfahren nach Anspruch 1 oder 2, **dadurch gekennzeichnet, dass** ein Schwerpunkt (S) des Anbaugeräts (10) in Abhängigkeit von der ermittelten Masse (m) des Anbaugeräts (10) ermittelt wird.

4. Verfahren nach einem der vorhergehenden Ansprüche, **dadurch gekennzeichnet, dass** zur Ermittlung der Masse (m) und/oder eines Schwerpunktes (S) des Anbaugerätes (10) ein Koordinatensystem (33) definiert wird mit einer parallel zu einer Längsrichtung (24) des Nutzfahrzeugs ausgerichteten x-Achse und einer parallel zu einer Hochrichtung (20) des Nutzfahrzeugs ausgerichteten z-Achse, wobei sich die x-Achse und die z-Achse in einem Nullpunkt des Koordinatensystems (33) schneiden.

5. Verfahren nach Anspruch 4, **dadurch gekennzeichnet, dass** der Nullpunkt an einer Hinterachse (34) des Nutzfahrzeugs angeordnet ist.

6. Verfahren nach Anspruch 4 oder 5, **dadurch gekennzeichnet, dass** eine x-Koordinate des Schwerpunktes (S) des Anbaugeräts (10) in Abhängigkeit von der Masse m des Anbaugeräts (10) ermittelt wird.

7. Verfahren nach Anspruch 6, **dadurch gekennzeichnet, dass** die x-Koordinate des Schwerpunktes (S) in Abhängigkeit von mindestens folgenden Größen ermittelt wird:

 - einem Winkel $\psi$ zwischen dem Oberlenker (16) und einer Fahrzeug-Horizontalen (22),
 - einer an einer Verbindung (E) zwischen Oberlenker (16) und Anbaugerät (10) angreifenden und entlang des Oberlenkers (16) wirksamen Kraft $F_E$,
 - einer x-Koordinate einer Anlenkstelle (K) des Unterlenkers (18) am Anbaugerät (10),

- einer Differenz zwischen den x-Koordinaten einer Anlenkstelle (E) des Oberlenkers (16) am Anbaugerät (10) und einer Anlenkstelle (K) des Unterlenkers (18) am Anbaugerät (10), und
- einer Differenz zwischen den z-Koordinaten einer Anlenkstelle (E) des Oberlenkers (16) am Anbaugerät (10) und einer Anlenkstelle (K) des Unterlenkers (18) am Anbaugerät (10).

**Claims**

1. Method for determining a mass (m) of an attachment (10) which is coupled on the front side to a supporting structure (14) of a work vehicle by means of a front power lift (12), wherein the power lift (12) has at least one upper link (16), at least one lower link (18) and a length-adjustable lifting arm (26), wherein one operative end (28) of the lifting arm (26) is connected in an articulated manner to the supporting structure (14) and another operative end (30) of the lifting arm (26) is coupled to a link connecting point (D) of the lower link (18), **characterized in that** the mass m of the attachment (10) is determined in accordance with

$$m = \frac{\overline{AD} \cdot \vec{F}_{Zyl} \cdot \cos(\varphi + \gamma) + \overline{AK} \cdot \vec{F}_E \cdot \sin(\psi - \varphi)}{\overline{AK} \cdot g \cdot \cos(\varphi - \theta)}$$

depending on the following variables:

- an angle $\psi$ between the upper link (16) and a vehicle horizontal (22),
- an angle $\varphi$ between the lower link (18) and the vehicle horizontal (22),
- an angle $\gamma$ between a vehicle vertical (32) and a connecting section between two operative ends (28, 30) of the lifting arm (26),
- an angle of inclination $\theta$ of the vehicle horizontal (22) in relation to the earth horizontal (21),
- a section AK which represents a connection along the lower link (18) between the supporting structure (14) and the attachment (10),
- a section AD which represents a connection along the lower link (18) between the supporting structure (14) and the link connecting point (D),
- a force $F_{Zyl}$ which is effective between the two operative ends (28, 30) of the lifting arm (26), and
- a force $F_E$ acting on a connection between upper link (16) and attachment (10) and effective along the upper link (16).

2. Method according to Claim 1, **characterized in that** a lifting arm has a piston-cylinder unit (26), in particular consists of a piston-cylinder unit (26).

3. Method according to Claim 1 or 2, **characterized in that** a centre of gravity (S) of the attachment (10) is determined depending on the determined mass (m) of the attachment (10).

4. Method according to one of the preceding claims, **characterized in that**, in order to determine the mass (m) and/or a centre of gravity (S) of the attachment (10), a system of coordinates (33) is defined with an x axis oriented parallel to a longitudinal direction (24) of the work vehicle and a z axis oriented parallel to a vertical direction (20) of the work vehicle, wherein the x axis and the z axis intersect at a zero point of the system of coordinates (33).

5. Method according to Claim 4, **characterized in that** the zero point is arranged on a rear axle (34) of the work vehicle.

6. Method according to Claim 4 or 5, **characterized in that** an x coordinate of the centre of gravity (S) of the attachment (10) is determined depending on the mass m of the attachment (10).

7. Method according to Claim 6, **characterized in that** the x coordinate of the centre of gravity (S) is determined depending on at least the following variables:

- an angle $\psi$ between the upper link (16) and a vehicle horizontal (22),
- a force $F_E$ acting on a connection (E) between upper link (16) and attachment (10) and effective along the upper link (16),

- an x coordinate of a coupling point (K) of the lower link (18) to the attachment (10),
- a difference between the x coordinates of a coupling point (E) of the upper link (16) to the attachment (10) and a coupling point (K) of the lower link (18) to the attachment (10), and
- a difference between the z coordinates of a coupling point (E) of the upper link (16) to the attachment (10) and a coupling point (K) of the lower link (18) to the attachment (10).

**Revendications**

1. Procédé de détermination d'une masse (m) d'un outil rapporté (10), lequel est monté de manière articulée du côté avant au moyen d'un vérin hydraulique frontal (12) à une structure porteuse (14) d'un véhicule utilitaire, le vérin hydraulique (12) possédant au moins un bras oscillant supérieur (16), au moins un bras oscillant inférieur (18) et un bras de levage (26) positionnable en longueur, une extrémité active (28) du bras de levage (26) étant reliée de manière articulée à la structure porteuse (14) et une autre extrémité active (30) du bras de levage (26) étant reliée de manière articulée à un point de liaison de bras oscillant (D) du bras oscillant inférieur (18), **caractérisé en ce que** la masse m de l'outil rapporté (10) est déterminée conformément à

$$m = \frac{\overrightarrow{AD} \cdot \overrightarrow{F_{Zyl}} \cdot cos(\varphi + \gamma) + \overrightarrow{AH} \cdot \overrightarrow{F_E} \cdot sin(\psi - \varphi)}{\overrightarrow{AK} \cdot g \cdot cos(\varphi - \theta)}$$

en fonction des grandeurs suivantes :

- un angle $\psi$ entre le bras oscillant supérieur (16) et une horizontale de véhicule (22),
- un angle $\varphi$ entre le bras oscillant inférieur (18) et l'horizontale de véhicule (22),
- un angle $\gamma$ entre une verticale de véhicule (32) et un segment de liaison entre deux extrémités actives (28, 30) du bras de levage (26),
- un angle d'inclinaison $\theta$ de l'horizontale de véhicule (22) par rapport à l'horizontale de la terre (21),
- un segment AK, qui représente une liaison le long du bras oscillant inférieur (18) entre la structure porteuse (14) et l'outil rapporté (10),
- un segment AD, qui représente une liaison le long du bras oscillant inférieur (18) entre la structure porteuse (14) et le point de liaison de bras oscillant (D),
- une force $F_{Zyl}$ agissant entre les deux extrémités actives (28, 30) du bras de levage (26), et
- une force $F_E$ agissant au niveau d'une liaison entre le bras oscillant supérieur (16) et l'outil rapporté (10) et le long du bras oscillant supérieur (16).

2. Procédé selon la revendication 1, **caractérisé en ce qu'**un bras de levage possède un groupe piston-cylindre (26), notamment se compose d'un groupe piston-cylindre (26) .

3. Procédé selon la revendication 1 ou 2, **caractérisé en ce qu'**un centre de gravité (S) de l'outil rapporté (10) est déterminé en fonction de la masse (m) déterminée de l'outil rapporté (10).

4. Procédé selon l'une des revendications précédentes, **caractérisé en ce qu'**un système de coordonnées (33) est défini en vue de déterminer la masse (m) et/ou un centre de gravité (S) de l'outil rapporté (10), comprenant un axe X orienté parallèlement à une direction longitudinale (24) du véhicule utilitaire et un axe Z orienté parallèlement à une direction de la hauteur (20) du véhicule utilitaire, l'axe X et l'axe Z se croisant en un point zéro du système de coordonnées (33).

5. Procédé selon la revendication 4, **caractérisé en ce que** le point zéro est disposé au niveau d'un essieu arrière (34) du véhicule utilitaire.

6. Procédé selon la revendication 4 ou 5, **caractérisé en ce qu'**une coordonnée X du centre de gravité (S) de l'outil rapporté (10) est déterminée en fonction de la masse m de l'outil rapporté (10).

7. Procédé selon la revendication 4, **caractérisé en ce que** la coordonnée X du centre de gravité (S) est déterminée en fonction d'au moins les grandeurs suivantes :

- un angle $\psi$ entre le bras oscillant supérieur (16) et une horizontale de véhicule (22),
- une force $F_E$ agissant au niveau d'une liaison (E) entre le bras oscillant supérieur (16) et l'outil rapporté (10) et le long du bras oscillant supérieur (16),
- une coordonnée X d'un point d'articulation (K) du bras oscillant inférieur (18) à l'outil rapporté (10),
- une différence entre les coordonnées X d'un point d'articulation (E) du bras oscillant supérieur (16) à l'outil rapporté (10) et un point d'articulation (K) du bras oscillant inférieur (18) à l'outil rapporté (10), et
- une différence entre les coordonnées Z d'un point d'articulation (E) du bras oscillant supérieur (16) à l'outil rapporté (10) et un point d'articulation (K) du bras oscillant inférieur (18) à l'outil rapporté (10).

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2239467 A2